# EUROPEAN PATENT SPECIFICATION

(11) **EP 0 319 306 B1**
(45) Date of publication and mention of the grant of the patent: **09.03.1994**
(21) Application number: 88311407.6
(22) Date of filing: 01.12.1988
(51) Int. Cl.: H01R 4/70, H02G 15/04

(54) **Environmental sealing**
Umgebungsabdichtung
Scellement d'environnement

(30) Priority: 01.12.1987 US 127341; 01.12.1987 US 126655
(43) Date of publication of application: 07.06.1989
(73) Proprietor: RAYCHEM CORPORATION, Menlo Park California 94025 (US)
(72) Inventor: Uken, William David, Fremont CA 94539 (US); Schoenstein, Paul, Redwood City CA 94061 (US); Camin, Geary, Los Altos CA 94022 (US)
(74) Representative: Auckland, Jacqueline

(56) References cited:
- EP-A- 0 100 228
- EP-A- 0 246 855

## Description

The present invention relates to environmental sealing of substrates in the electrical, electronics, telecommunications, power and related industries, particularly to sealing of electrical terminals or other contacts and wire splices.

An environmental seal may be provided in many ways. For example, the substrate to be sealed may be sealed by surrounding it with some sealed box or other enclosure, it may be tape wrapped, it may be painted or it may be coated or surrounded with bulk sealing composition. The present invention is preferably concerned with this last category. Such sealing may be provided to protect the substrate from various contaminants, and in the case of electrical contacts particularly from water.

A problem arises in providing environmental protection due to an inherent conflict between the desire for ease of installation of the sealing means, and tightness of the final seal. This problem is often overcome by having the sealing means undergo some change in physical condition, for example a paint may be applied as a liquid that subsequently solidifies. An alternative is the provision of a thermoplastic material, such as a hot-melt adhesive, that may be softened or melted and then applied to the substrate and allowed to solidify. Another example is a curable composition that in its pre-cured state has a low viscosity allowing it to be poured in place around the substrate, after which it is caused to cure.

For many applications dimensionally heat-recoverable articles are used to provide rugged, long-lasting environmental seals. Such an article may be supplied in an expanded, enlarged, form in which it is positioned loosely around the substrate and then heated to cause it to shrink into tight engagement with the substrate.

Recently it has been proposed to provide an environmental seal by means of a sealing material that is supplied pre-cured in some form of container which is then fixed relative to the substrate so that the sealing material is held under pressure against a surface of the substrate to be sealed. This technique may be contrasted with one where a sealing material in an uncured form is poured into a container to surround the substrate and is then cured in situ. Pre-curing has many advantages, particularly ease and speed of installation in the field.

An apparatus for providing environmental sealing in this way is disclosed and claimed in United States Patent US-A-4,600,261 (Debbaut). That patent discloses a protection apparatus comprising:
(a) an insulating gel characterized by
   (1) a cone penetration value from approximately 150-350 (10⁻¹ mm);
   (2) an ultimate elongation of at least approximately 200%;
   (3) a maximum tensile strength of approximately 20 psi;
   (4) a cohesive strength greater than its adhesive strength;
(b) first means to contain said gel;
(c) second means to retain said gel within said first means; and
(d) force means which acts on said first means so that said gel is maintained in compressive contact with said electrical contact and substantially encapsulates a conductive portion of said electrical contact, whereby upon release of said force means and a disengagement of said first means from said electrical contact, said gel remains substantially within said first means.

United States Patent US-A-4,634,207 discloses an apparatus for protecting a substrate, comprising
(a) a gel, the gel being cured prior to coming into contact with any part of the substrate to be protected, the gel having a cone penetration value of 100-350 (10⁻¹ mm) and an ultimate elongation of at least 200%; and
(b) means for deforming the gel into close and conforming contact with the substrate.

Also disclosed is a process for protecting a substrate, comprising the steps of:
pressing together a substrate to be protected and an apparatus comprising a support member, a gel located on the support member, the gel being cured prior to coming into contact with any part of the substrate, the gel having a cone penetration value of 100 to 350 (10⁻¹ mm) and an ultimate elongation of at least 200%, and means for deforming the gel into close and conforming contact with the substrate, the apparatus and the substrate being pressed together so that the gel contacts the substrate and is deformed into close and conforming contact therewith.

The use of sealing materials for environmental protection is also disclosed in the following patents: US-A-4,643,924 (Uken et al.), US-A-4,690,831 (Uken et al.), US-A-4,581,265 (Follette), US-A-4,610,910 (Follette), US-A-4,610,738 (Jervis), US-A-4,600,804 (Howard), US-A-4,701,574 (Shimirak), USSN 901,971 filed 29 August 1986 (Dubrow) equivalent to EP-A-0194872, USSN 859,171 filed 29 May 1986 (Kayser) equivalent to EP-A-0225370, US-A-4,662,692 (Uken et al.), US-A-4,647,717 (Uken), USSN 767,555 (Story) filed 20 August 1985 equivalent to EP-A-0213874, USSN 801,018 (Gamarra) filed 22 November 1985 equivalent to EP-A-0224389, and USSN 945,219 (Chang) filed 22 December 1986 equivalent to EP-A-0174165.

EP-A-0246855 (Raychem) discloses articles and methods for surface protection which employ a layer of a gel material and a covering layer of a flexible material which is flexible when installed on the surface to be protected and is hardenable or curable so that after installation the covering layer hardens to hold the gel layer in position and protect the gel layer from mechanical and other environmental conditions.

Cone penetration values in the above-mentioned specifications are unless the context otherwise requires or states, and are in this specification, expressed in units of 10⁻¹ mm and are measured by ASTM D217-68 at 21° C (70° F) on an undisturbed sample using a standard 1:1 scale cone (cone weight 102.5 g, shaft weight 47.5 g), the penetration being measured after 5 seconds.

Ultimate elongation values in the above-mentioned specifications are unless the context otherwise requires or states, and are in this specification, as measured according to the technique of ASTMD 638-80 at 21° C (70° F) using a type 4 die to cut the sample and at a speed of 50 cm/minute.

A problem can arise in difficult circumstances with the above prior art sealing material (referred to in general terms herein as a "gel") and/or above prior art methods. That problem may arise where the substrate is of a complex shape since it may then be difficult to cause the gel fully to cover all surfaces of the substrate by forcing against the substrate a gel pre-cured or case in a container. This is likely to be the case where the substrate is deep and must therefore penetrate a great distance into the gel, or where the substrate comprises many wires around which the gel must be caused to flow.

An alternative to pouring a liquid material around the substrate and then curing is likely to be unacceptable because it is impractical, time consuming and may result in the release of undesirable gasses during curing. The use of a hot-melt sealing material is frequency impractical due to the amount of heat required, and consequent possible damage to the substrate.

We have now found that this problem of installation of materials of the general type referred to as gels can be overcome by subjecting the material to mechanical deformation prior to use optionally in the presence of a suitable solvent or extender or suspending medium. This then allows the material to be directed to the position where it is required, by for example extrusion through a nozzle. The step of extrusion itself may provide the desired mechanical deformation. We have found that the flow properties of the material may be suitably altered by this deformation, but that it may be able, where necessary, afterwards to cohere or to "knit" back together again, retaining a sufficient ultimate elongation or other property required during its service life.

### Summary of the Invention

Thus, the invention provides a method of environmentally sealing a substrate, which comprises:
(a) providing (preferably at ambient temperature) a sealing material having an ultimate elongation according to ASTMD 638-80 of at least 100%, preferably 200%, and a cone penetration according to ASTM D217-68 at 21° C of greater than 100 (10⁻¹ mm);
(b) subjecting (preferably at ambient temperature) the material to a shearing force; and
(c) then causing (preferably at ambient temperature) the material to flow over the surface of the substrate;
so that when the material is subjected to a shearing force the shearing force is greater than the ultimate cohesive strength of the material.

The mechanical deformation may be carried out in the presence of a solvent such as methyl-ethyl ketone, but this may cause the material to swell with the risk of significant subsequent shrinkage. Thus, for many uses a suspending medium that is not a solvent for the material may be used, an example being isopropyl alcohol. In any case, I prefer that the material be processed to produce a smooth, generally homogeneous suspension/solution. The resulting material may be thixotropic. The solvent or suspending medium may be volatile liquid. In this embodiment, the mechanical deformation preferably has the effect of breaking a cross-linked network of the material to create a suspension of gel or other particles. Deformation is preferably carried out in a mill, for example using steel rollers set to a gap of say from 0,01270-0,0254 mm (0.0005-0.001 inch), preferably 0,00254-0,01270 mm (0.0001-0.0005 inch).

As an alternative to a mill, the material may be deformed by chopping with a blade or a wire.

In all embodiments the deformation is preferably a shear process and the material and the shear process are preferably such that substantially no shear heat is generated.

The sealing material is preferably at least partially cross-linked, for example at least 0.01 to 6 cross-link per weight average molecule, more preferably 0.5 to 4, especially 0.5 to 2 cross-links. The material may be cross-linked before or after it is deformed.

A container may be provided around the substrate, into which the material is directed, preferably by extrusion from a material-dispensing gun, for example of the general type known as a grease-gun. Alternatively, the material may be extruded or otherwise directed into the container, and the container with the material then positioned around the substrate. We have found surprisingly that when the container is thus positioned with respect to the substrate, the sealing material flows (for example by folding or rolling) around the substrate causing it to be covered in a most satisfactory way. This may be compared to the covering that is achieved with similar gel materials that have not undergone shear. In that case the material appears to have a skin that first stretches and finally breaks, but even then the material may not properly squeeze back over the substrate without excessive trapping or air.

The effect of shear in allowing such materials to be directed by extrusion or otherwise, but to retain their elongation or elastic memory or other properties, was quite unexpected. Also unexpected was the effect of shear in improving the ability of such materials prepositioned in a container to be deformed around a substrate. Shear preferably causes the material to be fragmented, which may be regarded as causing comminution, fracture, or brecciation, or chopping, depending on the size and size distribution of resulting particles. Small particles are preferred.

In the absence of the solvent or suspending medium, the mechanical deformation of the material is preferably carried out by forcing it through a mesh.

The effect of deformation of the material, whether in the presence or absence of a solvent or suspending medium, may be regarded as comminution. Its flow properties are thereby improved. In the case of gels as referred to above, the resulting material may be regarded as an agglomeration of particles, each comprising a cross-linked network containing an uncross-linked or liquid component, the particles being loosely interconnected by adhering together, possibly by autoadhesion. Before the mechanical deformation the material may be regarded as a single cross-linked network containing the uncross-linked or liquid component. This change may be reflected in an increase in it's G'' value, G'' being its loss modulus as determined by dynamic spectroscopy. The material may then be directed as desired by extrusion etc. Accordingly preferred methods of the invention involve deforming the material in such a way as to increase its 'G' value.

The invention therefore also provides a method of producing a sealing material which comprises:
(a) providing a material having an ultimate elongation according to ASTM D638-80 of at least 100% a cone penetration according to ASTM D217-68 at 21° C of greater than 100 (10⁻¹ mm); and
(b) deforming the material;
(c) so that the deforming force is a shear force greater than the ultimate cohesive strength of the material which fragments the material, and the method additionally comprises compressing the material to cause the fragmented particles to adhere together.

Compression preferably occurs during extrusion, and this can be enhanced by correct choice of extrusion nozzle size and nozzle-land length.

We have found also that advantageous sealing materials, particularly for the installation techniques disclosed herein, have a lower stress relaxation than that of otherwise similar prior art gel.

Thus, the invention also provides a sealing material which has:
(a) an ultimate elongation according to ASTM D638-80 of at least 100%;
(b) a cone penetration value of at least 150 (10⁻¹ mm); and
(c) a stress relaxation time, being the time at which the stress relaxation ratio is e-1, of less than 900 seconds.

Stress relaxation is to be performed at 23° C for 1 hour using a dynamic spectrometer (such as Rheometrics RDS-770, trade mark) in the transient parallel plate mode. A stress relaxation ratio may be deformed as the ratio of the stress, or modulus, G(T), at time t divided by peak stress achieved when the strain is applied at time t=0. The stress relaxation time is therefore the time at which the stress relaxation ratio is equal to e-1, ie. 0.368; e-1 describing the exponential decay of an idealized stress relaxation curve.

We prefer that the sealing material has a stress relaxation time of less than 800 seconds, more preferably less than 700 seconds, particularly less than 500 seconds.

Sealing material may be supplied in any convenient way. For some uses the material may be extruded from a material-dispensing gun, and the invention therefore further provides a cartridge (optionally a disposable cartridge) having therein a cured material having an ultimate elongation of at least 100% according to ASTM D638-80 and a cone penetration value of 150-350 (10⁻¹ mm).

The sealing material may be supplied in a device that provides one or more of the following:
(a) means for containing the material prior to use;
(b) means for physically deforming the material by shear or otherwise;
(c) means for directing the material by extrusion or otherwise to its desired position;
(d) means for locating the material around a substrate to be protected; and
(e) means for maintaining the sealing material under pressure against a surface of the substrate.

The sealing material of the invention or used in a method or article of the invention preferably has one or more of the following properties.

### Cone penetration

The cone penetration of the material before use is preferably greater than 100, more preferably greater than 150, particularly greater than 170, especially greater than 200 (10⁻¹ mm) It is preferably less than 400, more preferably less than 350, especially less than 300 (10⁻¹ mm).

### Ultimate elongation

The ultimate elongation of the material before use is preferably greater than 50%, more preferably greater than 100, particularly greater than 200%, more particularly greater than 300%.

### Storage modulus (G′)

Storage modulus of the material before use is determined by dynamic spectroscopy (using for example a Rheometrics RDS-7700, trade mark) measured at 24° C on a 25 mm diameter disc at 1 Hz frequency. G′ is preferably less than 107 dynes/cm2, more preferably less than 5x106 dynes/cm2, particularly less than 106 dynes/cm2, especially less than 5x105 dynes/cm2.

### Tan delta

Tan delta of the material before use is the ratio between the loss modulus (G˝) and the storage modulus (G′), each in dynes/cm2, each determined by dynamic spectroscopy. Tan delta is preferably less than 1, ie. the storage modulus is preferably greater than the loss modulus More preferably tan delta is less than 0.8, particularly less than 0.7.

### Stress relaxation time

For the material after deformation, this is preferably less than 900 seconds, more preferably less than 700 seconds, particularly less than 500 seconds, especially less than 200 seconds. Preferably it is greater than 10 seconds, particularly greater than 50 seconds. It is desirable that the material relax as fast as possible initially (so that the material can easily surround a substrate) and then not relax further, so that it can be put and remain under compression.

### Tack

The sealing material before and after deformation is preferably tacky, more preferably has high tack.

The means for mechanically deforming and for dispensing the sealing material preferably have one or more of the following characteristics.

In the absence of a solvent or a suspending medium, the material and the means for dispensing are preferably such that the material can be dispensed under a pressure of less than 3000 psi, more preferably less than 2000 psi.

In the presence of a solvent or a suspending medium, the material and the means for dispensing are preferably such that the material can be dispensed under a pressure of less than 100 psi, more preferably less than 50 psi, particularly less than 20 psi, particularly less than 10 psi.

The flow rate of the material from the means for dispensing is preferably greater than 0.01 grams per second, more preferably greater than 0.1 grams per second, particularly greater than 1.0 grams per second, especially greater than 10 grams per second.

In the absence of a solvent or a suspending medium, the means for deforming the material is preferably a mesh, grid or other perforate structure. Preferably the structure is, or is equivalent to, the size of 50 mesh (holes per inch) or finer, more preferably 70 mesh or finer, particularly 100 mesh or finer, more particularly 150 mesh or finer.

The material may be extruded through a nozzle of diameter greater than 0.075 cm, preferably greater than 0.1 cm, preferably greater than 0.2 cm. A smaller nozzle helps to stick the particles of comminuted material back together.

The nozzle land preferably has a length of at least 1 cm, more preferably at least 2 cm, particularly at least 3 cm. The land through which the material passes after deformation helps to cause pressure or flow orientation or gives the material time to relax some of its original memory before pressure reduction.

### Brief Description of the Drawings

Figure 1 and Figure 2 show two embodiments of a material-dispensing gun; and
Figures 3 and 4 show electrical connectors to be sealed with a sealing material.

### Detailed Description of the Drawings

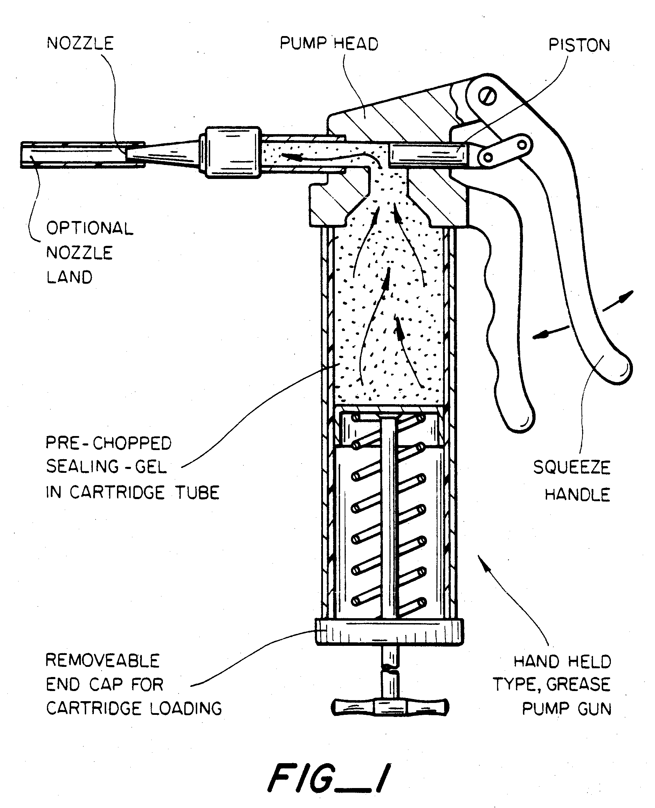

Figure 1 shows a material dispensing gun containing a sealing material that has been subjected to milling in the presence of a solvent or suspending agent.

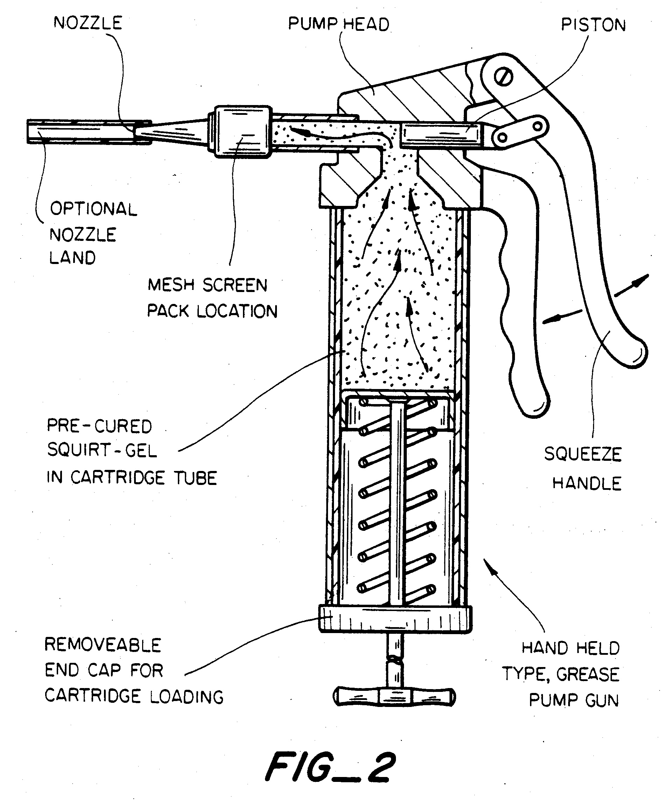

Figure 2 shows a material dispensing gun containing a sealing material. The gun has a mesh through which the sealing material can be forced to deform it mechanically, for example by shear. The gun also has a nozzle.

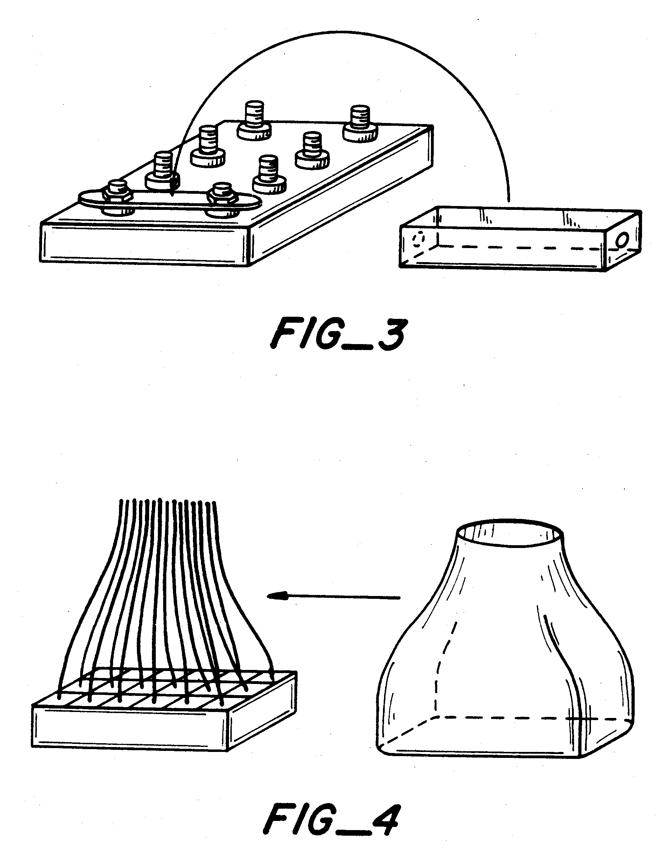

Figure 3 shows a terminal block having brass connection posts and a connecting bar that require corrosion protection. It can be difficult with prior art gels to obtain good protection under the connecting bar and under undercuts on the terminal posts. We have found that, using the invention, sealing material can be directly extruded under the bar, or can be first placed in a container (illustrated to the right of the connecting block) and the container then placed over the terminals and bar.

Figure 4 shows a connector that may be part of an automobile wiring system. An array of wires (say six by three) exit from a waffle-shaped connector back. A cover (illustrated to the right of the connector back) can be pre-filled with sealing material, or can be positioned over the connector back and then filled with sealing material. An air release hole may be provided to aid filing. Thus, a cover can be provided having two holes; one for injection of sealing material and the other for release of air.

The sealing material is usually electrically insulating (ie. has a resistivity of at least 10⁹ ohm.cm), but is not necessarily so for some possible uses of the invention, eg. when non-electrical substrates are being protected. Suitable sealing materials include materials made by gelling curable polyurethane precursor materials (as described for example in the patents referenced above in the presence of substantial quantities of a mineral oil, a vegetable oil or a plasticizer, or a mixture of two or more of these. Thus we have obtained excellent results using sealing materials prepared by gelling components which are commerically available for the preparation of polyurethane gels in situ, the gelation being carried out, however, in the presence of a suitable amount, eg. 30 to 70% by weight, of a suitable plasticizer, e.g. a trimellitate, or in the presence of a suitable animal or vegetble oil, e.g. 80 to 60%, preferably 80 to 70%, by weight of a mixture of mineral and vegetable oils in which the ratio by weight of mineral oil to vegetable oil is 0.7 to 2.4. Suitable sealing materials can also be prepared by curing reactive silicones with non-reactive extender silicones, and the invention includes the use of any sealing material having the desired cone penetration and elongation values. The sealing material may contain known additives such as moisture scavengers (e.g. benzoyl chloride), antioxidants, pigments and fungicides. The sealing material is preferably hydrolytically stable, moisture-insensitive, and substantially inert towards the substrate.

## Claims

1. A method of environmentally sealing a substrate which comprises:
(a) providing a sealing material having an ultimate elongation according to ASTM D638-80 of at least 100% and a cone penetration according to ASTM D217-68 at 21° C of greater than 100 (10⁻¹ mm);
(b) subjecting the material to a shearing force, and
(c) then causing the material to flow over a surface of the substrate;
so that the shearing force is greater than the ultimate cohesive strength of the material.

2. A method of environmentally sealing a substrate which comprises:
(a) providing a sealing material having an ultimate elongation according to ASTM D638-80 of at least 100% and a cone penetration according to ASTM D217-68 at 21° C of greater than 100 (10⁻¹ mm);
(b) providing a container around the substrate;
(c) subjecting the material to shear; and
(d) placing the material into the container such that it surrounds the substrate.

3. A method according to claim 2 in which the material is placed into the container by extrusion.

4. A method according to claim 2 or 3, wherein the container is positioned around the substrate either before or after the material is placed into the container.

5. A method according to claim 2 or 3, wherein the material is subjected to shear by milling

6. A method according to any of claims 1 to 5, wherein the material is forced through a nozzle and a nozzle-land such that the material is oriented under pressure.

7. A method according to any preceding claim, in which the substrate comprises an electrical terminal or wire splice.

8. A method according to any preceding claim,which additionally comprises maintaining the material under pressure against the surface.

9. A method of producing a sealing material, which comprises:
(a) providing a material having an ultimate elongation according to ASTM D638-80 of at least 100% and a cone penetration according to ASTM D217-68 at 21° C of greater than 100 (10⁻¹ mm); and
(b) deforming the material;
with the proviso that, when the material is deformed, the deforming force is a shear force greater than the ultimate cohesive strength of the material which fragments the material, and the method additionally comprises compressing the material to cause the fragmented particles of the material to adhere together.

10. A sealing material which has
(a) an ultimate elongation according to ASTM D 638-80 of at lease 100%;
(b) a cone penetration value of at least 150 (10⁻¹ mm); and
(c) a stress relaxation time, being the time at which the stress relaxation ratio is e⁻¹, of less than 900 seconds.

11. A sealing material according to claim 10, which comprises a silicone or polyurethane.

12. A cartridge for a material-dispensing gun for carrying out a method according to any of claims 1 - 10 and having therein a cross-linked material having an ultimate elongation according to ASTM D638-80 of at least 100%, and a cone penetration value of 150 to 350 (10⁻¹ mm).

13. A material dispensing gun for carrying out a method according to any of Claims 1-10 and having a cartridge according to claim 12 and having a perforate structure through which the material may be forced.

## Patentansprüche

1. Verfahren zum umgebungsmäßigen Abdichten eines Substrats, das folgende Schritte umfaßt:
(a) Vorsehen eines Dichtungsmaterials mit einer Bruchdehnung nach ASTM D638-80 von wenigstens 100 % und einer Konuspenetration nach ASTM D217-68 bei 21 °C von mehr als 100 (10⁻¹ mm);
(b) Aussetzen des Materials einer Scherkraft; und
(c) anschließend Veranlassen des Materials, über eine Oberfläche des Substrats zu fließen;
so daß die Scherkraft größer ist als die äußerste Kohäsionsfestigkeit des Materials.

2. Verfahren zum umgebungsmäßigen Abdichten eines Substrats, das folgende Schritte umfaßt:
(a) Vorsehen eines Dichtungsmaterials mit einer Bruchdehnung nach ASTM D638-80 von wenigstens 100 % und einer Konuspenetration nach ASTM D217-68 bei 21 °C von mehr als 100 (10⁻¹ mm);
(b) Vorsehen eines Behältnisses um das Substrat herum;
(c) Aussetzen des Materials einer Scherkraft; und
(d) Anbringen des Materials in dem Behältnis in das Substrat umgebender Weise.

3. Verfahren nach Anspruch 2,
wobei das Material durch Extrudieren in dem Behältnis angebracht wird.

4. Verfahren nach Anspruch 2 oder 3,
wobei das Behältnis entweder vor oder nach dem Anbringen des Materials in dem Behältnis um das Substrat herum positioniert wird.

5. Verfahren nach Anspruch 2 oder 3,
wobei das Material einer Scherkraft durch Mahlen ausgesetzt wird.

6. Verfahren nach einem der Ansprüche 1 bis 5,
wobei das Material durch eine Düse und einen Düsenansatz gedrückt wird, so daß das Material unter Druck ausgerichtet wird.

7. Verfahren nach einem der vorangehenden Ansprüche,
wobei das Substrat einen elektrischen Anschluß oder eine Drahtspleißstelle aufweist.

8. Verfahren nach einem der vorangehenden Ansprüche,
wobei außerdem das Material unter Druck gegen die Fläche gehalten wird.

9. Verfahren zum Herstellen eines Dichtungsmaterials, das folgende Schritte umfaßt:
(a) Vorsehen eines Dichtungsmaterials mit einer Bruchdehnung nach ASTM D638-80 von wenigstens 100 % und einer Konuspenetration nach ASTM D217-68 bei 21 °C von mehr als 100 (10⁻¹ mm); und
(b) Verformen des Materials;
mit der Maßgabe, daß dann, wenn das Material verformt wird, die Verformungskraft eine Scherkraft ist, die größer ist als die das Material brechende, äußerste Kohäsionsfestigkeit des Materials, wobei das Verfahren außerdem das Komprimieren des Materials beinhaltet, um zu bewirken, daß die fragmentierten Teilchen des Materials aneinanderhaften.

10. Dichtungsmaterial,
das folgendes aufweist:
(a) eine Bruchdehnung nach ASTM D638-80 von wenigstens 100 %;
(b) einen Konuspenetrationswert von wenigstens 150 (10⁻¹ mm); und
(c) eine Spannungsrelaxationszeit, wobei es sich um die Zeit handelt, bei der das Spannungsrelaxationsverhältnis e⁻¹ ist, von weniger als 900 s.

11. Dichtungsmaterial nach Anspruch 10,
das ein Silikon oder Polyurethan aufweist.

12. Kartusche für eine Materialabgabepistole zum Durchführen eines Verfahrens nach einem der Ansprüche 1 bis 10, mit einem darin enthaltenen vernetzten Material, das eine Bruchdehnung nach ASTM D638-80 von wenigstens 100 % und einen Konuspenetrationswert von 150 bis 350 (10⁻¹ mm) besitzt.

13. Materialabgabepistole zum Durchführen eines Verfahrens nach einem der Ansprüche 1 bis 10, mit einer Kartusche nach Anspruch 12 und einer perforierten Struktur, durch die sich das Material hindurchdrücken läßt.

## Revendications

1. Procédé pour protéger par scellement un substrat contre le milieu ambiant, qui consiste :
(a) à utiliser une matière de scellement ayant un allongement à la rupture, conformément à la norme ASTM D638-80 d'au moins 100% et une pénétration de cône, conformément à la norme ASTM D217-68 à 21°C, de plus de 100 (10⁻¹ mm) ;
(b) à soumettre la matière à une force de cisaillement, et
(c) à faire ensuite couler la matière sur une surface de substrat ;
de manière que la force de cisaillement soit supérieure à la force de cohésion ultime de la matière.

2. Procédé pour protéger par scellement un substrat contre le milieu ambiant, qui consiste :
(a) à utiliser une matière de scellement ayant un allongement à la rupture, conformément à la norme ASTM D638-80, d'au moins 100%_{,} et une pénétration de cône, conformément à la norme ASTM D217-68 à 21°C, de plus de 100 (10⁻¹ mm) ;
(b) à placer un récipient autour du substrat ;
(c) à soumettre la matière à un cisaillement ; et
(d) à introduire la matière dans le récipient afin qu'elle entoure le substrat.

3. Procédé selon la revendication 2, dans lequel la matière est introduite dans le récipient par extrusion.

4. Procédé selon la revendication 2 ou 3, dans lequel le récipient est placé autour du substrat avant ou après l'introduction de la matière dans le récipient.

5. Procédé selon la revendication 2 ou 3, dans lequel la matière est soumise à un cisaillement par broyage.

6. Procédé selon l'une quelconque des revendications 1 à 5, dans lequel on fait passer la matière à force à travers une buse et un embout parallèle de buse afin que la matière soit orientée sous pression.

7. Procédé selon l'une quelconque des revendications précédentes, dans lequel le substrat comprend une borne électrique ou une épissure de fils.

8. Procédé selon l'une quelconque des revendications précédentes, qui consiste en outre à maintenir la matière sous pression contre la surface.

9. Procédé de production d'une matière de scellement, qui consiste :
(a) à utiliser une matière ayant un allongement à la rupture, conformément à la norme ASTM D638-80, d'au moins 100% et une pénétration de cône, conformément à la norme ASTM D217-68 à 21°C, de plus de 100 (10⁻¹ mm) ; et
(b) à déformer la matière ;
pourvu que, lorsque la matière est déformée, la force de déformation soit une force de cisaillement supérieure à la force de cohésion ultime de la matière, qui fragmente la matière, et le procédé consiste en outre à comprimer la matière pour faire adhérer entre elles les particules fragmentées de la matière.

10. Matière de scellement qui présente
(a) un allongement à la rupture, conformément à la norme ASTM D638-80, d'au moins 100% ;
(b) une valeur de pénétration de cône d'au moins 150 (10⁻¹ mm) ; et
(c) un temps de relaxation en contrainte, qui est le temps auquel le rapport de relaxation en contrainte est e⁻¹, de moins de 900 secondes.

11. Matière de scellement selon la revendication 10, qui comprend une silicone ou un polyuréthanne.

12. Cartouche pour un pistolet de distribution de matière pour un procédé selon l'une quelconque des revendications 1-10 et renfermant une matière réticulée ayant un allongement à la rupture, conformément à la norme ASTM D638-80, d'au moins 100%_{,} et une valeur de pénétration de cône de 150 à 350 (10⁻¹ mm).

13. Pistolet de distribution de matière pour la mise en oeuvre d'un procédé selon l'une quelconque des revendications 1 à 10 et comportant une cartouche selon la revendication 12, et ayant une structure perforée à travers laquelle on peut faire passer à force la matière.
